# DEMANDE DE BREVET EUROPEEN

(11) **EP 1 441 210 A1**
(43) Date de publication de la demande: **28.07.2004**
(21) Numéro de dépôt: 03300166.0
(22) Date de dépôt: 17.10.2003
(51) Int. Cl.: G01M 3/32, G01L 19/06

(54) **Procédé et dispositif de contrôle de l'étanchéité d'un organe mécanique**

(30) Priorité: 18.10.2002 FR 0212981
(71) Demandeur: Renault s.a.s., 92100 Boulogne Billancourt (FR)
(72) Inventeur: Fonteneau, Gérard, 28410 BU (FR); Pavy, Fabienne, 75015 Paris (FR)

(57) **Abrégé**

Procédé de contrôle de l'étanchéité sous vide d'un organe mécanique (1) par mesure de pression à l'intérieur de celui-ci, caractérisé en ce que les moyens de mesure pression (13) sont isolés de l'organe mécanique pendant sa mise en dépression, et mis en communication avec cet organe lorsqu'une pression prédéterminée Pₜₑₛₜ est atteinte à l'intérieur de celui-ci.

## Description

La présente invention concerne un procédé de contrôle de l'étanchéité des carters de boîtes de vitesses. Elle concerne également un dispositif spécialement conçu pour la mise en oeuvre de ce procédé

Cette invention trouve une application privilégiée, mais non exclusive en fin de la ligne d'usinage des carters de boîtes de vitesses, après une opération de lavage.

L'étanchéité des carters de boîtes de vitesses est une condition impérative de leur bon fonctionnement, car ils renferment de l'huile.

Actuellement, pour s'assurer de l'étanchéité des carters de boîtes de vitesses, on utilise une méthode, dite « méthode sous pression air dans air », dont le principe est le suivant. Le carter est bouché, puis mis sous pression. On attend alors quelques secondes pour que les turbulences et les phénomènes thermiques dans l'air soient stabilisés, puis on procède au test proprement dit, en reliant le carter à un capteur de pression. Si la pression chute d'une valeur supérieure à la valeur de seuil de fuite fixée, le carter présente donc une fuite, et il est considéré comme défectueux.

Les inconvénients de cette méthode connue sont les suivants : les carters qui sortent de la « machine à laver » sont chauds et vont donc se refroidir pendant la mesure. Ce refroidissement entraîne une chute de pression considérée comme une fuite par le moyen de contrôle, ce qui revient à classer défectueux un carter qui ne l'est pas.

Le contrôle d'étanchéité peut également s'effectuer sous vide, c'est à dire en procédant de façon analogue, mais en faisant le vide dans le carter à l'aide d'une pompe à vide. L'avantage de cette seconde méthode est qu'elle permet de s'affranchir de l'influence de la température, grâce à la dépression.

Par la publication WO 96/14561, on connaît un procédé de contrôle d'étanchéité sans système de protection pour la cellule de mesure. Ce procédé n'est pas adapté au contrôle d'une boîte de vitesses, car le carter est une pièce usinée donc susceptible de présenter des copeaux. De plus, elle sort d'un processus de lavage, donc elle peut être humide, et les copeaux comme les gouttelettes d'eau peuvent détériorer le capteur de pression.

La présente invention a pour but de s'affranchir de la température du carter, pour que la mesure de débit de fuite soit la même que la pièce soit en train de refroidir, de se réchauffer, ou à température ambiante.

Cette invention vise également à éviter les remontées de copeaux ou d'humidité susceptibles de détériorer le capteur.

Elle repose sur l'utilisation de la méthode dite sous vide, avec un circuit de protection pour le capteur évitant la remontée de copeaux ou d'humidité.

Conformément à l'invention, les moyens de mesure de pression sont isolés du carter pendant sa mise en dépression, et mis en communication avec le carter lorsqu'une pression prédéterminée Pₜₑₛₜ est atteinte à l'intérieur de celui-ci.

Le dispositif proposé comporte une pompe à vide et une vanne à deux positions, permettant de relier directement le carter à la pompe ou au capteur de pression.

Ce dispositif comporte en outre une seconde vanne, dite vanne de stabilisation, placée entre la vanne à deux positions et le capteur de pression, permettant d'isoler le capteur de pression du carter, tant que la pression n'est pas stabilisée à l'intérieur de celui-ci

Les essais réalisés conformément à l'invention, montrent que la température n'a plus d'influence sur la mesure, et que le circuit de protection évite toute détérioration du capteur de pression. La présente invention permet donc de bénéficier des avantages de la méthode sous vide existante sans en supporter les inconvénients.

Cette invention sera mieux comprise à la lecture de la description suivante d'un mode de réalisation particulier de celle-ci, en se référant aux dessins annexés, sur lesquels :
- la figure 1 est un schéma de principe,
- la figure 2 est un diagramme fonctionnel de l'invention, et
- la figure 3 résume le cycle de mesure

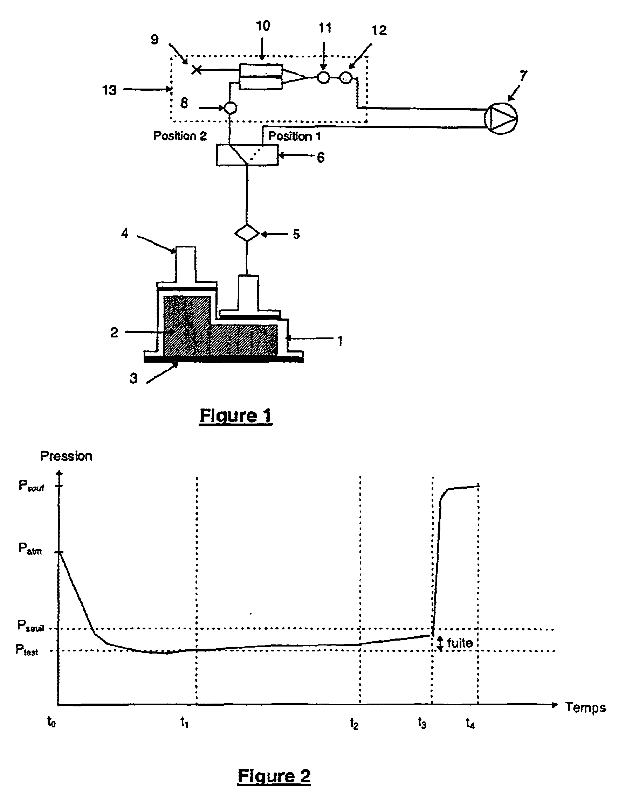

Sur figure 1, on a représenté schématiquement un carter de boîte de vitesses 1. Un joint torique 3 assure l'étanchéité avec la plaque (non représentée) sur laquelle il est posé, et une contre-forme 2 est placée à l'intérieur du carter 1 pour limiter le volume de test. Le carter 1, la cellule de mesure 13 et la pompe à vide 7 ne sont pas reliés en série, mais une vanne en Y 6 permettant de relier le carter 1 et la pompe 7, sans passer par la cellule 13 est insérée dans le circuit de montage. On évite ainsi d'introduire des copeaux ou de l'humidité dans la cellule de mesure 13 représentée en pointillés.

Outre la pompe à vide 7, la cellule 13 comporte une vanne de stabilisation 8, et un capteur de pression 10. Celui-ci est relié à une vanne de remplissage 12 par un régulateur 11, et il est fermé à son autre extrémité par un bouchon 9. Enfin le capteur 10 est relié à la vanne en Y 6 par la vanne de stabilisation 8.

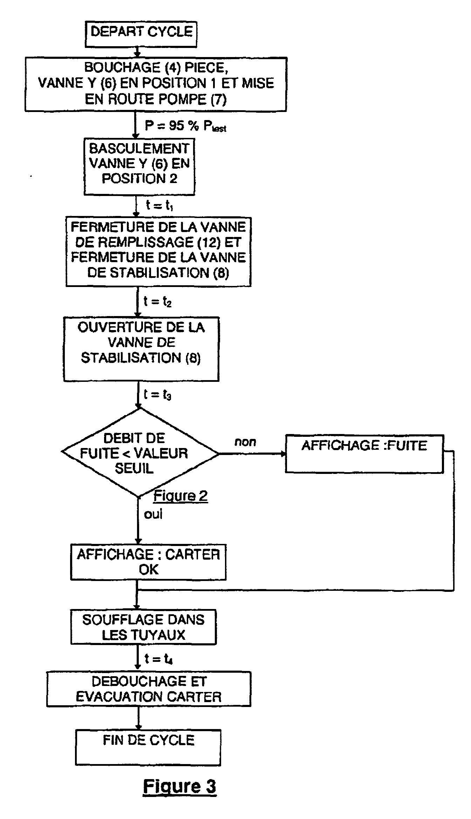

La figure 3 met en évidence que le départ du cycle de contrôle suppose la mise en place de bouchons sur la boîte. La vanne 6 peut alors être basculée dans la position où elle met en communication le carter 1 et la pompe 7, avant la mise en route de celle-ci.

Une fois la pression voulue quasiment atteinte, on bascule la vanne Y 6 en position 2 de façon à avoir en série le carter 1, la cellule 13 et la pompe 7. On peut ainsi utiliser le régulateur de la cellule 11 pour atteindre la pression de test (Pₜₑₛₜ).

On ferme ensuite la vanne de remplissage 12 pour couper l'aspiration d'air de la pompe 7 et on ferme la vanne de stabilisation 8 pour isoler le carter 1, et laisser l'air se stabiliser à l'intérieur de celui-ci (de t₁ à t₂).

On peut alors ouvrir la vanne de stabilisation 8, de manière à relier le carter 1 au capteur de pression 10, et mesurer la hausse de pression éventuelle correspondant à une fuite (de t₂ à t₃). Si cette hausse reste en dessous de la valeur de seuil (Pₛₑᵤᵢₗ), le carter est déclaré bon, sinon il est déclaré défectueux.

Une fois la mesure faite (à t₃), on déclenche le soufflage d'air à la pression P_{souf} dans le tuyau reliant la cellule 13 au carter, 1 afin de le nettoyer des impuretés pouvant s'être déposées pendant la mise sous vide. Ce soufflage est assuré par une alimentation en air comprimé de la cellule de mesure 13. Enfin les bouchons sont retirés, et le carter peut être évacué.

La figure 3 montre l'évolution de la pression au cours du cycle de mesure en cas de fuite. A tₒ, date de départ du cycle, la pression dans le carter est égale à la pression atmosphérique, La mise sous vide, c'est à dire l'abaissement de la pression jusqu'à Pₜₑₛₜ est effectuée entre t₀ et t₁. Entre t₁ et t₂, c'est à dire entre le basculement de la vanne 6 en position 2 et l'ouverture de la vanne de stabilisation 8, on a une période dite de stabilisation. Le test proprement dit se déroulant à partir de t₂ date d'ouverture de la vanne de stabilisation. Si la pression reste inférieure au seuil Pₛₑᵤᵢₗ, le carter est déclaré satisfaisant. Si au contraire une fuite se déclare (à t₃ sur le schéma), le carter est déclaré défectueux.

Comme indiqué plus haut, la description ci-dessus se réfère à un carter de boîte de vitesses, mais le procédé faisant l'objet de l'invention est applicable au contrôle de tout type d'organe mécanique utilisé ou non dans d'autres domaine que l'automobile.

## Revendications

1. Procédé de contrôle de l'étanchéité sous vide d'un organe mécanique (1) par mesure de pression à l'intérieur de celui-ci, **caractérisé en ce que** les moyens de mesure de pression (13) sont isolés de l'organe mécanique pendant sa mise en dépression, et mis en communication avec cet organe lorsqu'une pression prédéterminée Pₜₑₛₜ est atteinte à l'intérieur de celui-ci.

2. Procédé de contrôle selon la revendication 1, **caractérisé en ce que** la pression à l'intérieur de l'organe mécanique (1) est stabilisée avant les mesures de pression.

3. Procédé de contrôle selon la revendication 1 ou 2, **caractérisé en ce que** la pression interne de l'organe mécanique est comparée à un seuil Pₛₑᵤᵢₗ supérieur à Pₜₑₛₜ.

4. Procédé de contrôle selon la revendication 1, 2 ou 3, **caractérisé en ce que** les moyens de mesure (13) sont nettoyés par soufflage.

5. Dispositif pour la mise en oeuvre d'un procédé conforme à l'une des revendications précédentes, **caractérisé en ce qu'**il comporte une pompe à vide (7) et une vanne à deux positions (6) permettant de relier directement l'organe mécanique (1) à la pompe, ou au capteur de pression (10).

6. Dispositif de contrôle selon la revendication 5, **caractérisé en ce qu'**il comporte une seconde vanne (8) placée entre la vanne à deux positions (6) et le capteur de pression (10) permettant d'isoler ce dernier de l'organe mécanique tant que la pression n'est pas stabilisée à l'intérieur de celui-ci .

7. Dispositif de contrôle selon la revendication 5 ou 6 **caractérisé en ce qu'**il comporte une troisième vanne (12) permettant de couper l'aspiration de la pompe (7).

8. Dispositif de contrôle selon l'une des revendications 5 à 7, **caractérisé en ce que** le capteur de pression (10), la seconde et la troisième vanne (8, 12) sont regroupés dans une cellule de mesure (13).

9. Dispositif de contrôle selon l'une des revendications 5 à 8, **caractérisé en ce que** l'organe mécanique (1) est un carter de boîte de vitesses.
